# EUROPÄISCHE PATENTSCHRIFT

(11) **EP 0 902 314 B1**
(45) Veröffentlichungstag und Bekanntmachung des Hinweises auf die Patenterteilung: **04.10.2006**
(21) Anmeldenummer: 98114514.7
(22) Anmeldetag: 03.08.1998
(51) Int. Cl.: G02F 1/1333, G02F 1/13, G02F 1/167, F21V 8/00, G12B 11/00, A61B 1/07

(54) **Beleuchtungseinheit welche eine Vorrichtung zur analogen und gleichmässigen Dimmung eines in einem optischen Strahlengang geführten Lichtstroms aufweist**
Illumination unit comprising a device for continuous and uniform dimming of a luminous flux in an optical beam path
Unité d'éclairage comprenant un dispositif pour l'atténuation continue et homogène d'un flux lumineux

(30) Priorität: 16.08.1997 DE 19735585
(43) Veröffentlichungstag der Anmeldung: 17.03.1999
(73) Patentinhaber: SIEMENS AKTIENGESELLSCHAFT, 80333 München (DE)
(72) Erfinder: Hähl, Manfred, 65843 Sulzbach (DE)

(56) Entgegenhaltungen:
- EP-A- 0 023 741
- EP-A- 0 578 827
- WO-A-93/09460
- US-A- 5 629 996
- US-A- 5 647 657
- PATENT ABSTRACTS OF JAPAN vol. 1995, no. 01, 28. Februar 1995 (1995-02-28) -& JP 06 281909 A (A G TECHNOL KK), 7. Oktober 1994 (1994-10-07)

## Beschreibung

Die Erfindung betrifft eine Beleuchtungseinheit, die eine Vorrichtung zur analogen und gleichmäßigen Dimmung eines in einem optischen Strahlengang geführten Lichtstroms gemäß dem Oberbegriff des ersten Anspruchs aufweist.

Entladungslampen, wie zum Beispiel die aus der XENARC© - Reihe der Firma OSRAM, sind hocheffiziente Leuchtmittel mit einem hohen Wirkungsgrad von ca. 90 lm/W. Jedoch sind sie nach heutigem Kenntnisstand elektrisch nicht dimmbar.

Bekannt sind vielmehr Verfahren, bei denen der Lichtstrom einer Entladungslampe durch Absorption geregelt wird. Dies kann zum Beispiel unter Verwendung einer Blende oder eines Neutralfilters geschehen. Verfahren, die absorptiv wirken, haben aber den Nachteil, nicht gleichzeitig sowohl zu einer analog steuerbaren als auch zu einer gleichmäßigen Dimmung fähig zu sein. Mit einem Neutralfilter kann zwar bei gleichmäßiger Absorption über die gesamte Absorptionsfläche eine gleichmäßige Dimmung erreicht werden, jedoch ist nicht gleichzeitig eine analoge Steuerung der Absorption möglich. Wird andererseits der Lichtstrom beispielsweise durch einen Graukeil geführt, ist er zwar durch die Stellung des Graukeils im Strahlengang analog dimmbar, jedoch nur mit einer ungleichmäßigen Absorption im wirksamen Bereich. Denkbar wäre es, einen von einer Entladungstampe erzeugten Lichtstrom mit einer herkömmlichen LCD-Zelle absorptiv zu dimmen. Hierbei gehen jedoch schon allein durch den ersten Polarisator der LCD-Zelle mindestens 50 % des nutzbaren Lichts verloren, so daß die Lichtdurchlässigkeit der LCD-Zelle ein beachtliches Problem darstellt. Der verbleibende Lichtstrom ist dann zwar in den Grenzen des maximalem Kontrastes der LCD-Zelle steuerbar, jedoch ist nachteilig, daß die LCD-Zelle aufgrund ihrer elektrooptischen Kennlinie eine ungleichmäßige Lichtverteilung verursacht.

Aus der EP-A-578827 ist ein Beleuchtungssystem bekannt, bei der Licht einer Lichtquelle einer Flüssigkristalldimmerplatte passiert und Teile der Lichtstrahlen als Beleuchtungslicht verwendet werden.

Es ist nun Aufgabe der vorliegenden Erfindung, eine Vorrichtung zur analogen und gleichmäßigen Dimmung eines in einem optischen Strahlgang geführten Lichtstroms eine Entladungslampe bereitzustellen. Diese Aufgabe wird durch eine Vorrichtung mit den Merkmalen des ersten Anspruchs gelöst. Die abhängigen Ansprüche zeigen vorteilhafte Weiterbildungen und Ausgestaltungen der gefundenen Lösung. In der Fahrzeugtechnik ergibt sich eine besonders vorteilhafte Verwendung der Vorrichtung beispielsweise dann, wenn die Entladungslampe eine in einem Fahrzeug angeordnete zentrale Lichtquelle ist. Ohne Beschränkung auf diese Anwendung soll die Erfindung an diesem Beispiel näher erläutert werden. Andere Anwendungen sind beispielsweise in Verbindung mit Kaltlichtquellen in der Mikroskopie oder bei Endoskopiebeleuchtungen gegeben.

Zur Verdeutlichung der Erfindung sind drei Figuren beigefügt. Es zeigen
- **Figur 1A bis 1C** das Wirkprinzip der Dimmung durch Streuung,
- **Figur 2** den Einsatz einer nicht erfindungsgemäßen Vorrichtung als zentrale Lichtquelle in einem Fahrzeug und
- **Figur 3** ein Beispiel der gefundenen Lösung.

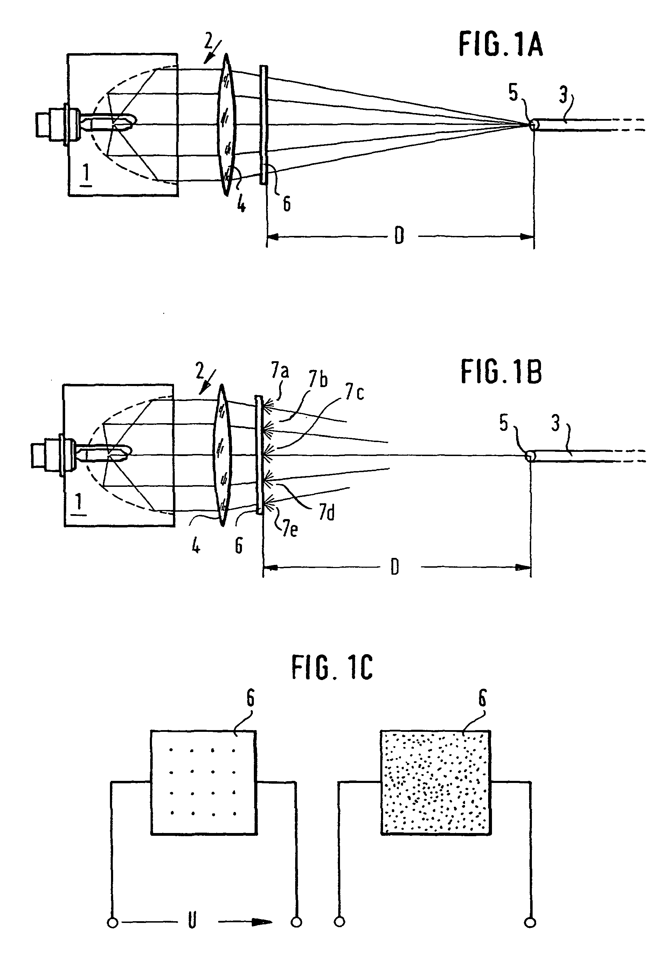

Gemäß der Darstellung in der **Figur 1A** erzeugt eine Entladungslampe 1 einen Lichtstrom 2, der durch nur andeutungsweise dargestellte Mittel als ein paralleles Strahlenbündel geführt wird. Um den Lichtstrom 2 beispielsweise in einen Lichtleiter 3 einzukoppeln, ist im Strahlengang eine konvexe Linse 4 angeordnet, die das Strahlenbündel auf die Stirnfläche 5 des Lichtleiters 3 fokussiert. Zur Dimmung des Lichtstroms 2 befindet sich im Strahlengang in einem gewissen Abstand D zur Stirnfläche 5 des Lichtleiters 3 ein steuerbarer Diffusor 6. Es steht dem Fachmann frei, statt eines Lichtleiters 3 auch einen anderen Lichtaufnehmer, wie z.B. ein flexibles Faserbündel zu verwenden.

Durch Manipulation der optischen Eigenschaften des Diffusors 6 läßt dieser, wie in der **Figur 1B** dargestellt, Streuzentren, z. B. 7a, 7b, 7c, 7d und 7e entstehen, die den konvergenten Strahlenverlauf zunehmend in einen divergenten verwandeln. Die Streuung des Lichtbündels am Diffusor 6 bewirkt, daß nur noch ein verringerter Teil des Lichtstroms 2 auf die Stirnfläche 5 des Lichtleiters 3 trifft und dort eingekoppelt wird. Der übrige Teil des Lichtstroms 2 wird jedoch nicht absorbiert und damit in Wärme umgewandelt, sondern lediglich in seiner Richtung abgelenkt. Es ist ein besonderer Vorteil der vorgeschlagenen Lösung, daß sie keine thermischen Probleme verursacht.

Zur wirksamen Verringerung der Lichteinkopplung in den Lichtleiter 3 ist der Abstand D im Verhältnis zum Querschnitt des im Strahlenbündel geführten Lichtstroms 2 sowie im Verhältnis zur Geometrie der übrigen an der Vorrichtung beteiligten Komponenten angemessen zu dimensionieren, so daß das an den Streuzentren 7a, 7b, 7c, 7d und 7e abgelenkte Licht auch tatsächlich an der Stirnfläche 5 des Lichtleiters 3 vorbeiführt. Der Abstand D zwischen dem lichtstreuenden Element - dem Diffusor 6 - und dem Lichtaufnehmer, z. B. dem Lichtleiter 3, bestimmt das maximale Dimmverhältnis.

Es ist vorteilhaft und die bevorzugte Ausgestaltung der vorgeschlagenen Vorrichtung, den Diffusor 6 durch ein an ihn anlegbares äußeres elektrisches Feld in seinen optischen Eigenschaften, das heißt seiner Transparenz zu beeinflussen. Durch eine elektrische Beeinflußbarkeit des Diffusors 6 wird der Lichtstrom 2 auf einfache Weise analog steuerbar. Überdies ist der Diffusor 6 durch seinen Aufbau und die Werkstoffauswahl so gestaltbar, daß er über seine gesamte optisch aktive Fläche eine gleichmäßige Streuung eines einfallenden Lichtstroms 2 erzeugt.

Als vorteilhaft hat sich hier beispielsweise eine NCAP^{™} - Folie erwiesen, die aus einem in einem Polymer eingebetteten Flüssigkristall besteht, was in der **Figur 1C** dargestellt ist. Eine NCAP^{™} - Folie arbeitet im Gegensatz zu herkömmlichen LCD Zellen ohne Polarisation. Beim Anlegen einer elektrischen Spannung U richten sich die gekapselten Moleküle des Flüssigkristalls in Richtung des elektrischen Feldes aus. Dadurch wird die Folie transparent. Ein durch sie hindurchtretender Lichtstrom bleibt konvergent. In Abwesenheit eines elektrischen Feldes sind die Moleküle des Flüssigkristalls hingegen in ihrer Ausrichtung statistisch verteilt, so daß einfallendes Licht im Material gestreut wird. Der Übergang vom streuenden in den transparenten Zustand läßt sich in Abhängigkeit vom anliegenden elektrischen Feld analog steuern.

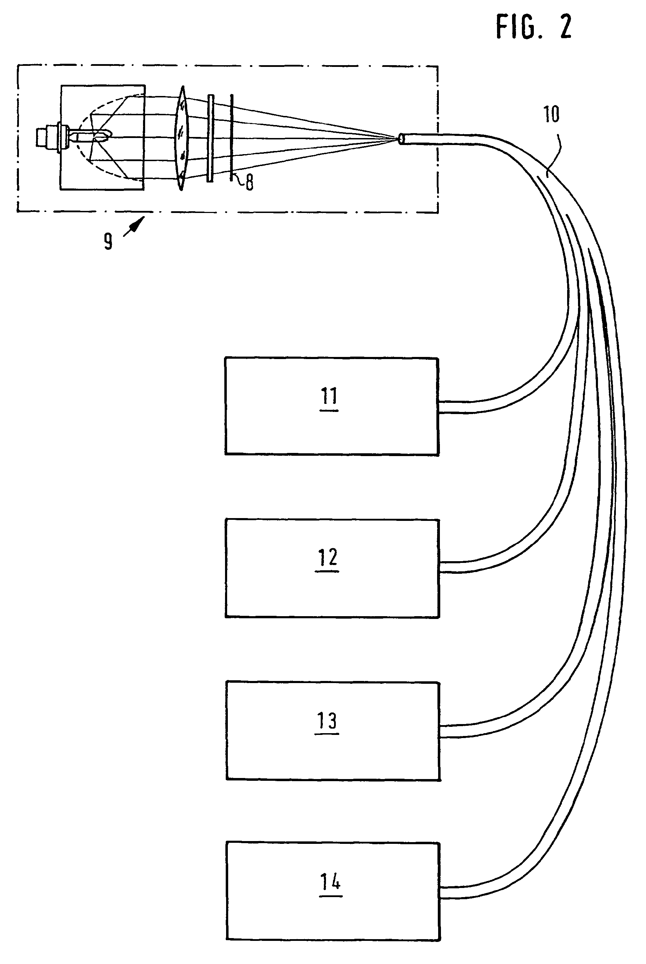

Die **Figur 2** geht auf eine Verwendung einer nicht erfindungsgemäßen Vorrichtung ein. Der gebündelte Lichtstrom 2 einer Entladungslampe 1 wird durch einen Diffusor 6 und gegebenenfalls einen Farbfilter 8 geführt, wobei er auf die Stirnfläche eines Lichtleitfaserbündels 10 fokussiert ist. In der Figur 2 ist diese gesamte Anordnung der zentralen Lichtquelle, bestehend aus einer Entladungslampe 1, einer konvexen Linse 4, dem Diffusor 6 und einem Farbfilter 8 mit dem Bezugszeichen 9 versehen. Das den Lichtstrom 2 aufnehmende Lichtleitfaserbündel 10 ist mit diversen Anzeigen und Bedienelementen im Fahrzeug verbunden. Anzeigen sind beispielsweise das bekannte Kombiinstrument 11 für Geschwindigkeit und Drehzahl, ein zentrales Informationsdisplay 12 für Meldungen unterschiedlichster Art oder ein Radio 13. Zu den (nicht im einzelnen dargestellten) Bedienelementen 14 zählen zum Beispiel diejenigen für die Betätigung der Lüftung oder Schalter zur Aktivierung bzw. Deaktivierung verschiedener Fahrzeugaggregate. Das gezeigte Farbfilter 8 ermöglicht eine Beleuchtungsfarbe nach Kundenwunsch. Für alle Anzeigen 11, 12, 13 und Bedienelemente 14 eines Fahrzeugs kann durch dieses eine Farbfilter 8 ein einheitlicher Farbton eingestellt werden.

Es ist vorteilhaft, wenn die vielen Leuchtmittel, die heute zur Beleuchtung der beispielhaft genannten Fahrzeugeinrichtungen benötigt werden, durch eine einzige zentrale Lichtquelle ersetzt werden können. Dabei liegen die Vorteile in einer besseren Effizienz der Lichterzeugung sowie der räumlichen Trennung von Lichterzeugung und Lichtbedarf. Letzteres hilft, das unvermeidliche Problem der Abwärme bei der Lichterzeugung in thermisch unkritische Bereiche zu verlagern. Darüber hinaus ist bei der Vorrichtung der Farbton für alle Beleuchtungseinrichtungen auf einfache Weise durch eine einzige Farbortbestimmung zentral einstellbar. Bei herkömmlichen dezentralen Beleuchtungen kann der Farbton nur schwerlich optimal aufeinander abgestimmt werden. Zum einen unterscheidet sich das Lichtspektrum der einzelnen Lichtquellen voneinander. Zum anderen ist die bei dezentralen Beleuchtungen erforderliche Abstimmung im Fertigungsprozeß für ein Fahrzeug zumindest nicht praktikabel, da die Systemkomponenten in der Regel von unterschiedlichen Zulieferern beigestellt werden.

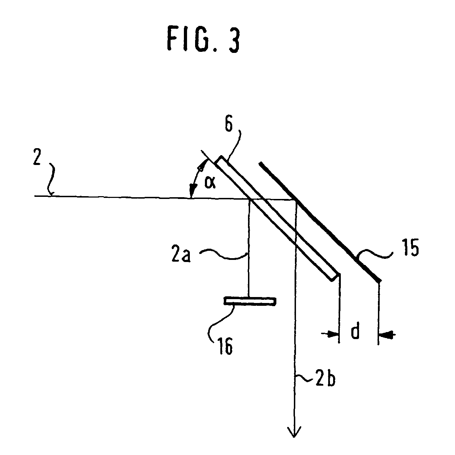

Die **Figur 3** zeigt die gefundene Lösung, die vorteilhaft in Verbindung mit einer zentralen Lichtquelle in einem Fahrzeug genutzt werden kann. Es handelt sich dabei um eine Anordnung, um auf engstem Raum eine Mehrfachdimmung des Lichtstromes zu erreichen. Wenn der von der Entladungslampe 1 erzeugte Lichtstrom 2 sehr stark gedimmt werden soll, ist es gerade bei Anordnungen mit sehr begrenztem Bauraum vorteilhaft, den Diffusor 6 im Winkel α von vorzugsweise α = 45° zum einfallenden Lichtstrom 2 geneigt anzuordnen und parallel, vorzugsweise planparallel im Abstand d zum Diffusor 6 einen Spiegel 15 vorzusehen. Der Spiegel 15 lenkt den einfallenden Lichtstrom 2 um und leitet ihn dadurch erneut durch den Diffusor 6. So wird der Lichtstrom 2 durch ein und denselben Diffusor 6 zweimal gedimmt. Soweit es nötig ist, lassen sich nach dem hier beschriebenen Wirkprinzip durch beidseitig des Diffusors 6 geeignet angeordnete Spiegel Mehrfachdimmungen am Diffusor 6 realisieren. Der am Spiegel reflektierte Lichtstrom bildet das Nutzlicht 2b, wohingegen ein durch den schrägen Lichteinfall an der Oberfläche des Diffusors reflektierter Lichtstrom - das sogenannte Doppelbild 2a - zur Vermeidung von Störungen durch eine Blende 16 ausgefiltert wird. Der Abstand d zwischen dem Diffusor 6 und dem Spiegel 15 ist für eine Trennung des Doppelbildes vom Nutzlicht erforderlich.

Die erfindungsgemäße Vorrichtung zur analogen und gleichmäßigen Dimmung eines in einem optischen Strahlengang geführten Lichtstroms führt dazu, daß bedarfsgerecht zum Beispiel an Bedienelementen sehr wenig Licht bereitgestellt werden kann, was in aller Regel für den Zweck der Suchhilfe völlig ausreicht, wohingegen an großflächigen Anzeigen wie einem Informationsdisplay hohe Leuchtdichten zur Verfügung gestellt werden können, die selbst bei einer hohen Umgebungshelligkeit noch eine gute Ablesbarkeit der angezeigten Meldungen sicherstellen, wobei aber - was wesentlich ist - am Ort des Lichtbedarfs keine Wärme erzeugt wird, die abgeführt oder der durch konstruktive Maßnahmen Rechnung getragen werden muß. Herkömmliche Leuchtmittel und Beleuchtungsanordnungen haben den Nachteil, daß sie einerseits in ihrer Energiebilanz wenig effizient sind, wenn am Ort des Lichtbedarfs nur eine geringe Lichtstärke erforderlich ist, sie andererseits aber bei höheren Leuchtdichten schnell zu einer punktuell starken Erwärmung führen. Diese Nachteile können durch den Einsatz einer zentralen Lichtquelle vermieden werden. Ihre Realisierung setzt jedoch voraus, daß für eine hoch effiziente Lichtquelle, wie eine Entladungslampe, eine analoge und gleichmäßige Dimmung zur Verfügung steht.

## Patentansprüche

1. Beleuchtungseinheit, welche eine Entladungslampe, die einen Lichtstrom erzeugt, und eine Vorrichtung zur analogen und gleichmäßigen Dimmung des in einem optischen Strahlengang geführten Lichtstroms der Entladungslampe aufweist, wobei die Vorrichtung im optischen Strahlengang des von der Entladungslampe (1) erzeugten Lichtstroms (2) einen steuerbaren Diffusor (6) aufweist, **dadurch gekennzeichnet, dass** im Strahlengang des von der Entladungslampe (1) erzeugten Lichtstroms (2) der Diffusor (6) um einen Winkel α von 45° zum einfallenden Lichtstrom (2) geneigt angeordnet ist und parallel im Abstand d zum Diffusor (6) ein Spiegel (15), der den Lichtstrom umlenkt, so dass der Lichtstrom zweimal durch den Diffusor gedimmt wird, vorgesehen ist und **dass** ein an der Oberfläche des Diffusors (6) reflektiertes Doppelbild (2a) durch eine Blende (16) ausgefiltert und so vom Nutzlicht (2b) getrennt wird.

2. Beleuchtungseinheit nach Anspruch 1, **dadurch gekennzeichnet, dass** der steuerbare Diffusor aus in ihrer Lage elektrisch manipulierbaren Schwebeteilchen in einer transparenten Flüssigkeit besteht.

3. Beleuchtungseinheit nach Anspruch 1, **dadurch gekennzeichnet, dass** der steuerbare Diffusor aus einem in einem Polymer eingebetteten Flüssigkristall besteht.

4. Beleuchtungseinheit nach Anspruch 1, **dadurch gekennzeichnet, dass** die Entladungslampe eine in einem Fahrzeug angeordnete zentrale Lichtquelle (9) ist.

5. Beleuchtungseinheit nach Anspruch 1 oder einem der nachfolgenden Ansprüche, **dadurch gekennzeichnet, dass** im Strahlengang des von der Entladungslampe erzeugten dimmbaren Lichtstroms (2) vor seiner Einkopplung in einen Lichtleiter (3) ein Farbfilter (8) angeordnet ist.

## Claims

1. Illumination unit which comprises a discharge lamp that generates a light flux, and a device for analogue and uniform dimming of the light flux of the discharge lamp guided in an optical beam path, the device comprising a controllable diffuser (6) in the optical beam path of the light flux (2) generated by the discharge lamp (1), **characterized in that** the diffuser (6) in the beam path of the light flux (2) generated by the discharge lamp (1) is arranged inclined at an angle α of 45° with respect to the incident light flux (2) and a mirror (15), which deviates the light flux so that the light flux is dimmed twice by the diffuser, is provided parallel at a distance d from the diffuser (6), and **in that** a double image (2a) reflected on the surface of the diffuser (6) is filtered out by a diaphragm (16) and thus separated from the useful light (2b).

2. Illumination unit according to Claim 1, **characterized in that** the controllable diffuser consists of particles, whose position can be electrically manipulated, suspended in a transparent liquid.

3. Illumination unit according to Claim 1, **characterized in that** the controllable diffuser consists of a liquid crystal embedded in a polymer.

4. Illumination unit according to according to Claim 1, **characterized in that** the discharge lamp is a central light source (9) arranged in a vehicle.

5. Illumination unit according to according to Claim 1 or one of the subsequent claims, **characterized in that** a colour filter (8) is arranged in the beam path of the dimmable light flux (2) generated by the discharge lamp, before it is coupled into a light guide (3).

## Revendications

1. Unité d'éclairage, qui comporte une lampe à décharge produisant un flux lumineux et un dispositif destiné à la gradation analogique et régulière du flux lumineux suivant la trajectoire d'un faisceau optique de la lampe à décharge, où le dispositif comporte, sur la trajectoire du faisceau optique du flux lumineux (2) produit par la lampe à décharge (1), un diffuseur (6) réglable, **caractérisée par le fait que**, sur la trajectoire du faisceau optique du flux lumineux (2) produit par la lampe à décharge (1), le diffuseur (6) est disposé incliné d'un angle α de 45° par rapport au flux lumineux (2) incident et qu'il est prévu, parallèlement au diffuseur (6) et à une distance d du diffuseur (6), un miroir (15) qui fait dévier le flux lumineux, si bien que le flux lumineux est atténué deux fois par le diffuseur, et qu'une image fantôme (2a) réfléchie sur la surface du diffuseur (6) est filtrée par un diaphragme (16) et est, ainsi, séparée de la lumière utile (2b).

2. Unité d'éclairage selon la revendication 1, **caractérisée par le fait que** le diffuseur réglable se compose de particules en suspension dans un liquide transparent dont la position peut être manipulée électriquement.

3. Unité d'éclairage selon la revendication 1, **caractérisée par le fait que** le diffuseur réglable se compose d'un cristal liquide noyé dans un polymère.

4. Unité d'éclairage selon la revendication 1, **caractérisée par le fait que** la lampe à décharge est une source lumineuse (9) centralisée montée dans un véhicule.

5. Unité d'éclairage selon la revendication 1 ou l'une des revendications ultérieures, **caractérisée par le fait qu'**un filtre coloré (8) est disposé sur la trajectoire des rayons du flux lumineux (2), généré par la lampe à décharge et réglable graduellement, avant son couplage dans un guide d'ondes optiques (3).
